(19) Europäisches Patentamt
European Patent Office
Office européen des brevets

(11) EP 0 781 790 A1

(12) **EUROPÄISCHE PATENTANMELDUNG**

(43) Veröffentlichungstag:
**02.07.1997 Patentblatt 1997/27**

(21) Anmeldenummer: **96116933.1**

(22) Anmeldetag: **22.10.1996**

(51) Int. Cl.$^6$: **C08G 18/10**, C08G 18/28, C08G 18/83, C08G 18/80, C09J 175/04, C08G 59/28

(84) Benannte Vertragsstaaten:
**AT BE CH DE DK ES FR GB IT LI NL SE**

(30) Priorität: **28.12.1995 DE 19549028**

(71) Anmelder: **HÜLS AKTIENGESELLSCHAFT**
**45764 Marl (DE)**

(72) Erfinder: **Gurke, Thorsten**
**08873 Somerset, New Jersey (US)**

# (54) Feuchtigkeitsvernetzende Schmelzklebstoffe, welche kein oder nur geringe Mengen an Kohlendioxid emittieren

(57) Feuchtigkeitsvernetzende Schmelzklebstoffe des Standes der Technik haben den Nachteil, daß bei der Vernetzung Kohlendioxid entsteht, was zu Fehlstellen in der Verklebung führen kann.

Die erfindungsgemäßen Schmelzklebstoffe auf der Basis von Polyol, Diisocyanat, Hydroxyepoxid und Anhydrid lassen sich dagegen ohne Nachteile verarbeiten.

EP 0 781 790 A1

Printed by Rank Xerox (UK) Business Services
2.14.8/3.4

## Beschreibung

Die vorliegende Erfindung betrifft einen feuchtigkeitsvernetzenden Schmelzklebstoff, bei dem kein oder nur wenig Kohlendioxid bei der Aushärtung entsteht.

Feuchtigkeitsvernetzende Schmelzklebstoffe nach dem Stand der Technik basieren auf einem Reaktionsprodukt von einem oder mehreren Polyolen (Polyester, Polylacton und/oder Polyether mit Molekulargewichten von 500 bis 10 000), die amorph oder teilkristallin sein können, mit einem Diisocyanat (aromatische Grundstruktur, wie Diphenylmethandiisocyanat, oder aliphatisch, wie Isophorondiisocyanat), wobei sich das Verhältnis von Hydroxylgruppe und Isocyanatgruppe in einem Verhältnis von 1 : 1,5 bis 1 : 3,0 befindet. Resultierend aus dieser Reaktion ist ein mit Isocyanat umgesetztes Polyol oder Polyolgemisch:

$$\text{HO - Polyol - OH} + 2\ \text{OCN - R - NCO} \rightarrow \text{OCN - R - NH - CO - O - Polyol - O - CO - NH - R - NCO}$$

R = aliphatischer oder aromatischer Rest

Die freie Isocyanatgruppe reagiert mit Feuchtigkeit (Wasser) zu einer Aminogruppe und Kohlendioxid:

$$\text{R' - NCO} + H_2O \rightarrow \text{R' - }NH_2 + CO_2.$$

Die entstandene Aminogruppe reagiert mit einer weiteren freien Isocyanatgruppe unter Kettenverlängerung zu einem Harnstoffderivat:

$$\text{R' - }NH_2 + \text{R' - NCO} \rightarrow \text{R'- NH - CO - NH - R'}.$$

Die entstandene Harnstoffgruppe ist wiederum fähig mit freiem Isocyanat unter Vernetzung zu reagieren:

$$\text{R' - NH - CO - NH - R'} + \text{R' - NCO} \longrightarrow \begin{array}{l}\text{R'- N - CO - NH - R'}\\ \quad\;\;|\\ \quad\;\text{CO - NH - R'.}\end{array}$$

Bei allen Reaktionen ist R' = Reaktionsprodukt aus Polyol und Diisocyanat.

Die Problematik bei dieser Vernetzungsreaktion ist das entstehende Kohlendioxid, welches aus dicken Schichten nicht, oder nur sehr schlecht ausdiffundieren kann, und/oder zu Fehlstellen in der Verklebung führt.

Weiterhin müssen zur vollständigen Vernetzung von 1 Mol mit Isocyanat umgesetztes Polyol oder Polyolgemisch mindestens 2/3 Mol Wasser zur Verfügung stehen. Bei Verklebungen von nicht feuchtigkeitsdurchlässigen Substraten kann daher eine nicht ausreichende Vernetzung entstehen.

Der vorliegenden Erfindung liegt die Aufgabe zugrunde, einen feuchtigkeitsvernetzenden Schmelzklebstoff bereitzustellen, der die genannten Nachteile nicht aufweist.

Diese Aufgabe wurde durch die erfindungsgemäß zusammengesetzten Schmelzklebstoffe und deren Herstellungsverfahren gelöst.

Diese feuchtigkeitsvernetzenden Schmelzklebstoffe, basieren auf niedermolekularen Polyolen, wie Polyester, Polylactone und Polyether mit Molekulargewichten von 500 bis 10 000, sowie deren Mischungen, welche mit Diisocyanat im Verhältnis Hydroxylgruppe zu Isocyanatgruppe von 1 : 1,5 bis 1 : 3,0 umgesetzt werden. Die verbleibenden Isocyanatgruppen zu 50 bis 100 % mit Hydroxyepoxiden reagieren und anschließend mit Anhydrid, monomolekulare oder Polyanhydriden, versetzt werden, wobei die Menge Anhydrid 25 % bis 75 % des Gehaltes an Epoxidgruppen sein sollte.

Das verwendete Polyol kann dabei ein niedermolekularer, amorpher oder teilkristalliner Polyester, Polyether oder Polylacton mit einer Molmasse von 500 bis 10 000 allein oder in einer beliebigen Mischung sein.

Als Hydroxyepoxid wird vorzugsweise Glycidol (2,3 - Epoxy - 1 - propanol) eingesetzt.

Als Anhydrid werden bevorzugt monomolekulare Anhydride wie Maleinsäureanhydrid und Phthalsäureanhydrid und/oder Polyanhydride wie Maleinsäureanhydrid gepfropftes Polybuten eingesetzt.

Als weitere Komponente werden Diisocyanate mit aromatischer oder aliphatischer Grundstruktur eingesetzt. Als Beispiele seien hier Diphenylmethandiisocyanat oder Isophorondiisocyanat genannt.

Katalysatoren zur Beschleunigung der Reaktion zwischen Isocyanat und Hydroxylgruppe, sowie der Additionsreaktion zwischen Säuregruppe und Epoxidgruppe können zum Beispiel Dibutylzinndilaurat und Diazabicyclooctan sein.

Die Herstellung der erfindungsgemäßen Schmelzklebstoffe kann auf verschiedenen Wegen erfolgen:

1. Herstellung über Polyurethanprepolymer:

Das Polyol oder Polyolgemisch wird mit Diisocyanat im Überschuß umgesetzt, wobei das Verhältnis Hydroxylgruppe zu Isocyanatgruppe 1 : 1,5 bis 1 : 3,0 sein sollte:

$$HO - Polyol - OH + OCN - R - NCO \rightarrow OCN - R - NHCOO - Polyol - OOCNH - R - NCO$$

Dieses Produkt (R') wird mit einem Hydroxyepoxid, wie Glycidol, zu 100 oder weniger Prozent umgesetzt.

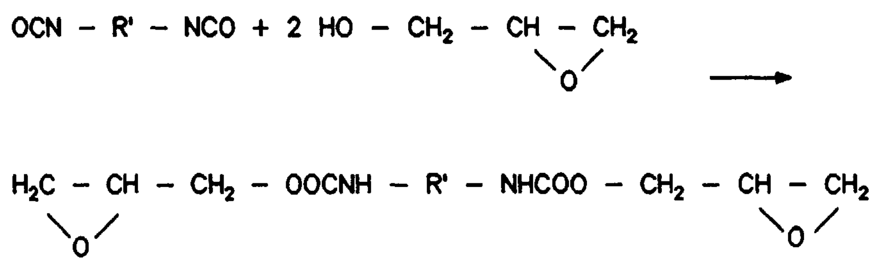

Das nun epoxidierte Polyol (R") wird mit einem Anhydrid abgemischt. Nach vollständiger Mischung ist der feuchtigkeitsvernetzende Schmelzklebstoff fertig.

Abweichend von dem beschriebenen Verfahren kann das Isocyanat vorgelegt werden und entweder das Hydroxyepoxid oder das Polyol oder Polyolgemisch zuerst zugeführt werden.

2. Herstellung im Zweistufenprozeß:

Im ersten Schritt wird das Diisocyanat mit Hydroxyepoxid umgesetzt. Das Verhältnis zwischen Hydroxyepoxid und Diisocyanat ist 1 : 0,6 bis 1 : 1,5. Das entstandene Produkt kann zwischengelagert, oder direkt dem nächsten Reaktionsschritt zugefügt werden. Im nächsten Reaktionsschritt wird das oben hergestellte Produkt einem Polyol oder einem Polyolgemisch zugefügt, wobei das Verhältnis Hydroxylgruppen zu Isocyanatgruppe 1 : 1 oder größer sein sollte, damit keine Hydroxylgruppe vorhanden ist, wenn das Anhydrid eingemischt wird.

Alternativ kann zu dem Additionsprodukt aus Diisocyanat und Hydroxyepoxid auch das Polyol oder Polyolgemisch zugefügt werden.

Öffnung des Anhydridringes mit Feuchtigkeit:

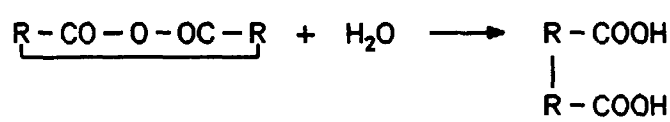

Reaktion der Epoxydgruppe mit der entstandenen Säuregruppe: Vernetzungsreaktionen

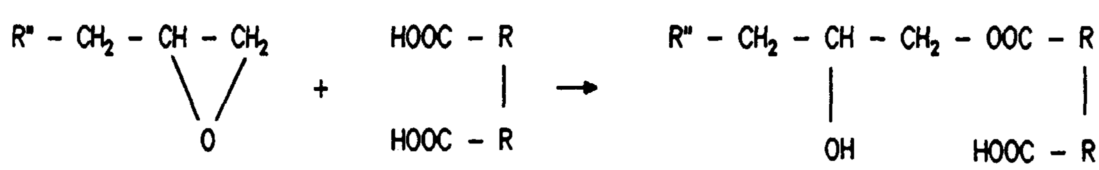

Reaktion der verbleibenden Säuregruppe mit einem weiteren epoxidierten Polyol:

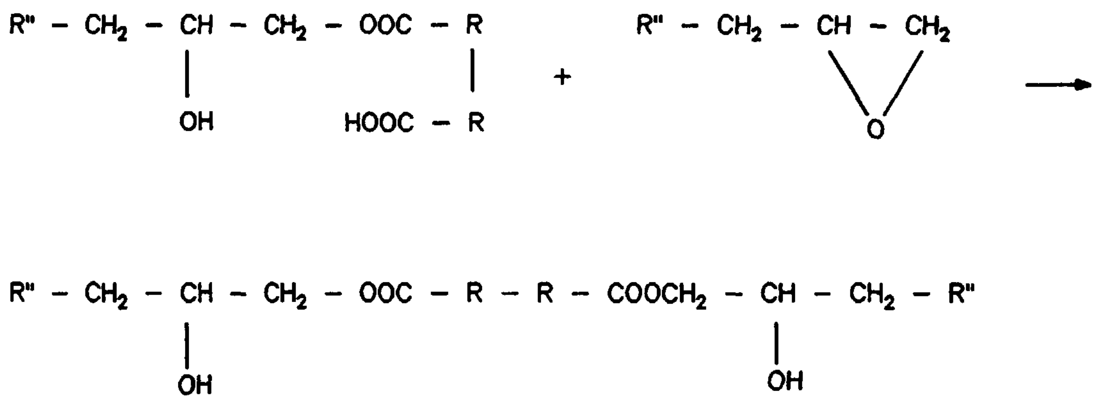

Die entstandenen Hydroxylgruppen können weitere Anhydridgruppen unter Ausbildung von Säuregruppen addieren, z. B.:

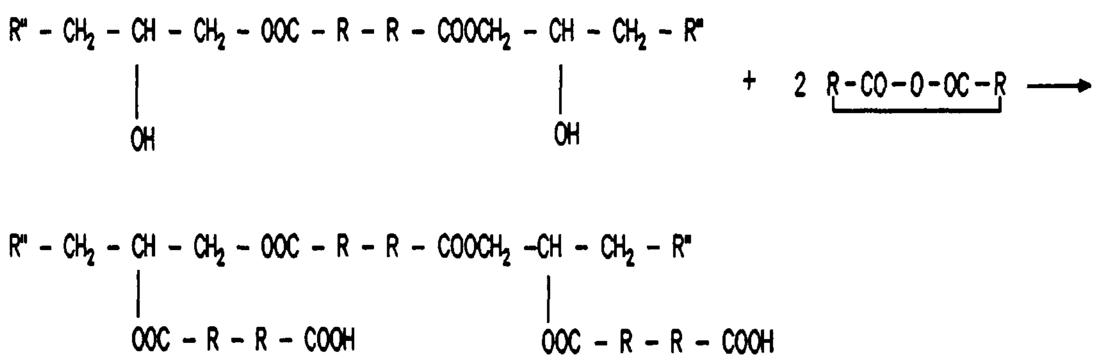

Die entstandenen Säuregruppen können weitere epoxidierte Polyolmoleküle addieren, welches zu einer räumlichen Vernetzung führt.

Öffnung einer weiteren Anhydridgruppe über die enstandene Hydroxylgruppe:

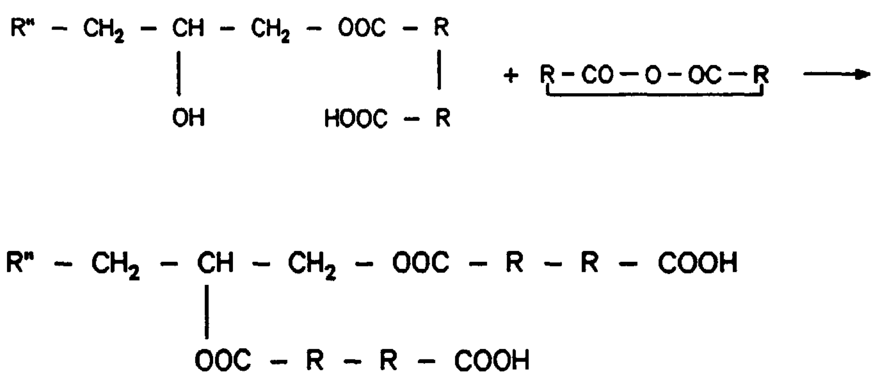

Das obige Produkt ist weiterhin fähig mit epoxidierten Polyolmolekülen unter Vernetzung zu reagieren.

Durch die Vielzahl der einzelnen Vernetzungsreaktionen ist eine räumliche Vernetzung gewährleistet.

Zusätzlich ist nur ein sehr geringer Anteil an Wasser nötig, um eine vollständige Vernetzung zu gewährleisten.

Restisocyanat, wenn vorhanden, kann mit Feuchtigkeit zur Aminogruppe reagieren unter Kohlendioxidabspaltung. Da der resultierende Isocyanatgehalt im System nahe 0 % ist, ist die entstehende Menge an Kohlendioxid wesentlich geringer als in herkömmlichen feuchtigkeitshärtenden Schmelzklebstoffen.

Die resultierende Aminogruppe kann sowohl mit der Epoxidgruppe, als auch mit der Anhydridgruppe unter Addition und Vernetzung reagieren.

Weiterhin ist diese Reaktion als eine Nebenreaktion zu betrachten, die nicht zur Vernetzung nötig ist.

Beispiele

Beispiel 1:

200 g eines teilkristallinen Copolyesters, basierend aus Hexandiol und Adipinsäure, mit einer Hydroxylnummer von 32 mg KOH/g und einem Molekulargewicht von 3 500 wird bei 120 °C geschmolzen und mit 31,4 g Diphenylmethandiisocyanat, entspricht einem Verhältnis von Hydroxylgruppe zu Isocyanatgruppe von 1 : 2,2, umgesetzt. Nach 30 Min. Reaktionszeit werden 10,2 g 2,3-Epoxy-1-propanol langsam zugefügt. Die Menge an 2,3-Epoxy-1-propanol entspricht 95 % der theoretisch, verbleibenden Isocyanatgruppen. Nach Erreichen des theoretischen Isocyanatgehaltes, 30 Min., wird 37,5 g eines Maleinsäure gepfropften Polyisobutylens mit einem Anhydridgehalt von 17 % zugefügt. Die Menge des Maleinsäure gepfropften Polybutens entspricht der stöchiometrischen Menge an Epoxidgruppen. Nach Homogenisierung der Mischung wurde das Produkt abgefüllt.
Viskosität 130 °C, Brookfield Spindel 4 = 7,3 Pa • s
Fließpunkt (Ring und Kugel) = 66 °C
Wärmescherstand einer Holzverklebung bei 100 °C und 350 g Belastung nach 2 Wochen Lagerung bei Raumtemperatur und 65 % Luftfeuchtigkeit = > 24 Stunden.

Beispiel 2:

26,64 g Isophorondiisocyanat werden bei Raumtemperatur mit 8,88 g 2,3-Epoxy-1-propanol umgesetzt, welches einem Verhältnis von Hydroxylepoxid zu Diisocyanat = 1 : 1 entspricht. Nach 1 Stunde Reaktionszeit werden 200 g eines geschmolzenen Polyesters, basierend aus Hexandiol und Adipinsäure mit einer Hydroxylzahl von 32 mg KOH/g und einem Molekulargewicht von 3 500, von 100 °C zugefügt. Die Menge an Polyester ist berechnet für eine 95%ige Umsetzung für die Reaktion von Isocyanat mit Hydroxylgruppen. Die Mischung wird bei 120 °C gerührt. Nach Erreichen des theoretischen Isocyanatgehaltes werden 34,6 g eines Maleinsäure gepfropften Polybutens zugegeben. Die Menge des Maleinsäure gepfropften Polybutens entspricht der stöchiometrischen Menge an Säuregruppen, die entstehen bei der Reaktion von Anhydrid mit Wasser, um die Epoxidgruppen zu spalten.
Viskosität 130 °C, Brookfield Spindel 4 = 16,4 Pa • s
Fließpunkt (Ring und Kugel) = 70 °C
Wärmescherstand einer Holzverklebung bei 100 °C und 350 g Belastung nach 2 Wochen Lagerung bei Raumtemperatur und 65 % Luftfeuchtigkeit = > 24 Stunden.

Beispiel 3:

100 g eines teilkristallinen Polyesters, bestehend aus Hexandiol und Adipinsäure mit einer Hydroxylzahl von 32 mg KOH/g und einem Molekulargewicht von 3 500, und 100 g eines amorphen Polyesters, Glasübergangstemperatur = -30 °C mit einer Hydroxylzahl von 32 mg KOH/g und einem Molekulargewicht von 3 500, wurden bei 120 °C homogenisiert. Anschließend wurden 26,64 g Isophorondiisocyanat zugegeben, was einem Hydroxylgruppen zu Isocyanatgruppen Verhältnis von 1 : 2,2 entspricht. Zur Beschleunigung der Additionsreaktion von Hydroxylgruppe und Isocyanatgruppe wurden 0,05 Gew-.% Dibutylzinndilaurat als Katalysator zugegeben. Nach 1 Stunde war der Isocyanatgehalt auf den theoretischen Wert gefallen. Anschließend wurden 8,88 g 2,3-Epoxy-1-propanol zugegeben, was einer 95%igen Umsetzung der verbliebenen Isocyanatgruppen entspricht. Nach weiteren 1,5 Stunden Reaktionszeit, Erreichen des theoretischen Isocyanatgehaltes, wurden 34,6 g eines Maleinsäure gepfropften Polybutens zugegeben. Die Menge des Maleinsärue gepfropften Polybutens entspricht der stöchiometrischen Menge an Epoxidgruppen. Nach Homogenisierung wurde der Reaktivklebstoff abgefüllt.
Viskosität 130 °C, Brookfield Spindel 4 = 30,5 Pa • s
Fließpunkt (Ring und Kugel) = 70 °C
Wärmescherstand einer Holzverklebung bei 100 °C und 350 g Belastung nach 2 Wochen Lagerung bei Raumtemperatur und 65 % Luftfeuchtigkeit = > 24 Stunden.

Beispiel 4:

100 g eines teilkristallinen Polyesters, bestehend aus Hexandiol und Adipinsäure mit einer Hydroxylzahl von 32 mg KOH/g und einem Molekulargewicht von 3 500, und 100 g eines amorphen Polyesters, Glasübergangstemperatur = -30 °C mit einer Hydroxylzahl von 32 mg KOH/g und einem Molekulargewicht von 3 500, wurden bei 120 °C homogenisiert. Anschließend wurden 31,4 g Diphenylmethandiisocyanat zugegeben, was einem Hydroxylgruppen zu Isocyanatgruppen Verhältnis von 1 : 2,2 entspricht. Nach 30 Min. war der Isocyanatgehalt auf den theoretischen Wert gefallen. Anschließend wurden 10,3 g 2,3-Epoxy-1-propanol zugegeben, was einer 100%igen Umsetzung der verbliebenen Isocyanatgruppen entspricht. Nach einer weiteren Stunde Reaktionszeit, Erreichen des theoretischen Isocyanatgehaltes, wurden 37,5 g eines Maleinsäure gepfropften Polybutens zugegeben. Die Menge des Maleinsäure gepfropften Polybutens entspricht der stöchiometrischen Menge an Epoxidgruppen. Nach Homogenisierung wurde der Reaktivklebstoff abgefüllt.
Viskosität 130 °C, Brookfield Spindel 4 = 30,5 PA • s
Fließpunkt (Ring und Kugel) = 60 °C
Wärmescherstand einer Holzverklebung bei 100 °C und 350 g Belastung nach 2 Wochen Lagerung bei Raumtemperatur und 65 % Luftfeuchtigkeit = > 24 Stunden.

Auswertung:

Sämtliche Beispiele zeigen die Herstellungsmöglichkeit von feuchtigkeitshärtenden Schmelzklebstoffen. Die Produkte sind niederviskos und lassen sich bei moderaten Temperaturen verarbeiten. Nach Lagerung bei Raumtemperatur und normaler Luftfeuchtigkeit vernetzen die Verklebungen, was der Wärmescherstand beweist. Die Testtemperatur des Wärmescherstandes ist oberhalb des Fließpunktes der einzelnen Versuche. Bei einer nicht vernetzten Verklebung würde der Klebstoff erweichen und die Verklebung würde versagen. Durch die beschriebenen Prozesse können hervorragende feuchtigkeitsvernetzende Klebstoffe hergestellt werden.

Der Vorteil des erfindungsgemäßen Klebstoffs ist, daß:

1. kein, oder nur ein sehr geringer Anteil an Kohlendioxid emitiert wird,
2. aufgrund des Chemismus feuchtigkeitsundurchlässige Substrate verklebt werden können und
3. kein, oder nur ein sehr geringer Anteil an freiem, monomolekularem Diisocyanat vorhanden ist.

**Patentansprüche**

**1.** Feuchtigkeitsvernetzender Schmelzklebstoff auf Basis von Polyolen, Diisocyanaten, Hydroxyepoxiden und Anhydriden.

**2.** Verfahren zur Herstellung eines feuchtigkeitsvernetzenden Schmelzklebstoffs nach Anspruch 1,
dadurch gekennzeichnet
daß zunächst Polyol mit Diisocyanat und anschließend die verbleibenden Isocyanatgruppen mit Hydroxyepoxid umgesetzt werden und dann zu diesem Gemisch ein Anhydrid hinzugefügt wird.

**3.** Verfahren zur Herstellung eines feuchtigkeitsvernetzenden Schmelzklebstoffs nach Anspruch 1,
dadurch gekennzeichnet,
daß zunächst Diisocyanat mit Hydroxyepoxid und dann dieses Gemisch mit Polyol versetzt wird, anschließend wird Anhydrid eingemischt.

**4.** Verfahren nach Anspruch 2 oder 3,
dadurch gekennzeichnet,
daß das Verhältnis von Hydroxylgruppe zu Isocyanatgruppe 1 : 1,5 bis 1 : 3 beträgt.

**5.** Verfahren nach Anspruch 3,
dadurch gekennzeichnet,
daß das Verhältnis Hydroxyepoxid zu Diisocyanat 1 : 0,6 bis 1 : 1,5 beträgt.

**6.** Verfahren nach einem der Ansprüche 2 bis 5,
dadurch gekennzeichnet,
daß als Polyole niedermolekulare Polyester, Polyether und Polylactone mit Molmassen von 500 bis 10 000, die amorph oder teilkristallin sind, allein oder in Mischung verwendet werden.

**7.** Verfahren nach einem der Ansprüche 2 bis 6, dadurch gekennzeichnet, daß als Diisocyanat Diphenylmethandiisocyanat oder Isophorondiisocyanat eingesetzt wird.

**8.** Verfahren nach einem der Ansprüche 2 bis 7, dadurch gekennzeichnet, daß als Hydroxyepoxid 2,3-Epoxy-1-propanol verwendet wird.

**9.** Verfahren nach einem der Ansprüche 2 bis 8, dadurch gekennzeichnet, daß als Anhydrid monomolekulares oder Polyanhydrid eingesetzt werden kann.

**10.** Verfahren nach einem der Ansprüche 2 bis 9, dadurch gekennzeichnet, daß als Anhydrid mit Maleinsäure gepfropftes Polybuten verwendet wird.

Europäisches Patentamt

# EUROPÄISCHER RECHERCHENBERICHT

Nummer der Anmeldung
EP 96 11 6933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 193 746 A (HENKEL KGAA ;CHEM PLAST SPA (IT)) 10.September 1986<br>* Ansprüche 1,4-6 *<br>* Seite 7, Zeile 7 - Zeile 17 * | 1 | C08G18/10<br>C08G18/28<br>C08G18/83<br>C08G18/80<br>C09J175/04<br>C08G59/28 |
| A | FR 2 328 017 A (DU PONT) 13.Mai 1977<br>* Ansprüche 1,14-21 *<br>* Seite 13, Zeile 17 - Zeile 31 * | 1 | |
| A | US 2 830 038 A (D.B. PATTISON) 8.April 1958<br>* Ansprüche 1,7,8 *<br>* Spalte 2, Zeile 55 - Spalte 3, Zeile 27 * | 1 | |
| | | | **RECHERCHIERTE SACHGEBIETE (Int.Cl.6)** |
| | | | C08G |

Der vorliegende Recherchenbericht wurde für alle Patentansprüche erstellt

| Recherchenort | Abschlußdatum der Recherche | Prüfer |
|---|---|---|
| DEN HAAG | 7.Mai 1997 | Van Puymbroeck, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)